# EUROPEAN PATENT SPECIFICATION

(11) **EP 1 428 430 B1**
(45) Date of publication and mention of the grant of the patent: **04.01.2006**
(21) Application number: 02755881.6
(22) Date of filing: 08.08.2002
(51) Int. Cl.: A01K 85/14

(54) **SWING BODY OF LURE**
SCHWINGKÖRPER FÜR KÖDER
LEURRE A CORPS OSCILLANT

(30) Priority: 29.08.2001 JP 2001260013
(43) Date of publication of application: 16.06.2004
(73) Proprietor: Usui, Nobuo, Yoshiki-gun, Gifu 506-1111 (JP)
(72) Inventor: Usui, Nobuo, Yoshiki-gun, Gifu 506-1111 (JP)
(74) Representative: Leeming, John Gerard
(86) International application number: PCT/JP2002/008137
(87) International publication number: WO 2003/020021

(56) References cited:
- FR-A- 2 001 178
- JP-A- 10 210 890
- JP-U- 57 180 569
- US-A- 3 305 964
- US-A- 4 202 127
- US-A- 4 926 577

## Description

### Technical Field

The present invention relates to a rocker for use in a lure, which rocks to attract fish.

### Background Art

Among typical types of lures, there are a spoon and a spinner, each of which has a plate-like vane (which is equally referred to as "blade") made to move under resistance of water. The spoon is designed such that a fishing line is joined to one end portion of a vane and a fish hook is joined to the other end portion thereof and the vane rocks from side to side in a flapping fashion in the water, while the spinner is made such that a vane is located separately from a fish hook and the vane rotates at a high speed.

The spoon allows the vane to take a diversity of action depending upon angler' s skill, but is disadvantageous in that, because the vane is somewhat slow in action, it provides less fish attracting effect and its simulation tends to be easy to see through. On the other hand, although the spinner shows a great fish attracting effect because of moving sharply and in a big way, its movement depends monotonously upon only rotations, so difficulty is experienced in making attention-paying fish bite into it.

Documents JP-U-57 180 569, US-A-4 202 127 and US-A-3 305 964 disclose such fishing lures.

### Disclosure of Invention

The prevent invention has been developed in consideration of the above-mentioned actual circumstances, and it is therefore an object of the invention to provide a lure capable of making its vane take unprecedented fascinating action to attract fish and less susceptible to the detection of its simulation, thus providing a great fishing result.

For achieving this purpose, a rocker of a lure according to the present invention, as defined in claim 1, is characterized in that a ring body made to maintain a vertical posture in the water is inserted into two vanes, and one vane is formed to sink more deeply into the water with respect to the other vane. The ring body signifies a body made from a copper wire and shaped into a ring-like configuration, and further made to be joined to a fishing line and made to suspend the two vanes in one location so that the two vanes are capable of rocking. In order for the ring body to maintain a vertical posture in the water, for example, it is considered that a sinker or float is attached to the ring body, or that the ring body is attached to a lower side of a float, for example, a lower side of a body of a lure having a small fish configuration. Moreover, in order for the one vane to sink more deeply with respect to the other vane, for example, it is considered that the two vanes are designed to be different in weight, size or width from each other, or that the weight of the fish hook is placed on the one vane.

If only one vane is set on a ring body, the vane moves to go back and forth along the same route and rocks to draw a clear circular arc. On the other hand, in a case in which two vanes are provided in an overlapping condition according to the present invention, the forces working on the two vanes due to the resistance of the water exert the influence on each other so that each of the vanes moves in three dimensions to draw an eight-figure-like configuration. Moreover, the two vanes work with each other while maintaining the distance therebetween, and rocks with the same cycle. That is, the two vanes do not move individually but rocking integrally (this does not signify that the two vanes adhere to each other). When the two vanes are located in an overlapping condition in this way, a new movement takes place which is unobtainable in the case of the employment of a single vane. This enhances the fish attraction effect and, at the same time, lowers the possibility of the simulation being detected by fish, thereby providing a great fishing result. This movement occurs because one vane sinks more deeply with respect to the other vane. The two vanes can also be made to be lower in weight than water.

In the case of the employment of only one vane, the movement of the vane depends upon its shape or weight. Therefore, according to a general consideration, two vanes different in shape or weight from each other should move with different cycles, and in a case in which two vanes are placed in an overlapping condition in a state where one ring body is inserted thereinto as taken in the present invention, the two vanes marvelously work with each other to move with the same cycle. It is preferable that, of the two vanes, one is used as an upper vane and is formed to have a wide width but having a short length while the other (which sinks more deeply into the water) is used as a lower vane and is formed to have a narrow width but having a long length. The variation of the movement appears noticeably in the upper vane having a wide width and a short length, and although the vane should originally move slowly, it obviously moves faster and more intensively as compared with the case of the employment of a single vane, which leads to an improvement of the fish attraction. Moreover, in the case of the employment of a single vane having a large weight, it can not rock or can move poorly if well-balanced with respect to a pressure due to a flow of the water. According to the present invention, even if the lower vane is placed under such a situation, the presence of the upper vane induces a rocking action of the lower vane so that the lower vane can rock surely.

Taking into consideration a cause of the occurrence of such an action, each of the upper vane and the lower vane is made such that, when its lower surface side undergoes a resistance due to a water flow, a negative pressure zone appears on an upper surface side opposite thereto. A negative pressure zone developing on the upper surface side of the lower vane tends to draw the upper vane. Upon receipt of this force, the original movement of the upper vane varies, which causes a decrease in amplitude or a shortening in cycle. On the other hand, for the lower vane, its own negative pressure zone deforms due to the passage of the upper vane and, in consequence, the lower vane moves along with the upper vane so that the lower vane coincides in cycle with the upper vane. This is considered to be a factor in the phenomenon that both the vanes work with each other in an isolated condition.

In addition, the movement of each of the vanes becomes certainly more intensive as compared with the case of the employment of a single vane, and judging from the fact that, even if, for example, the lower vane is weighty to show a poor movement singly, the presence of the upper vane causes a satisfactory rocking action thereof, it is considered that the factor therein is that an energy of a water flow the lower vane receives is efficiently converted into a vane rocking energy.

### Brief Description of Drawings

FIG. 1 is a perspective view showing a mode of a lure according to the present invention.
FIG. 2 is a side elevational view showing the lure shown in FIG. 1.
FIG. 3 is a side elevational view showing another mode of a ring body.
FIG. 4A is a front elevational view showing a further mode of a lure according to the present invention.
FIG. 4B is a side elevational view showing the mode shown in FIG. 4A.
FIG. 5A is a side elevational view showing a mode of an upper vane.
FIG. 5B is a side elevational view showing a mode of a lower vane.
FIG. 6A is a plan view showing a mode of a spacer to be placed between an upper vane and a hook with a ring.
FIG. 6B is a cross-sectional view taken along a line A-A of FIG. 6A.
FIG. 7 is a perspective view showing a state in a case in which a lure according to the present invention swims in the water.
FIG. 8A is an illustration of a locus drawn by a horizontal cross section of an upper vane in a case in which a lure according to the present invention swims in the water.
FIG. 8B is an illustration of a locus drawn by a horizontal cross section of a lower vane in a case in which a lure according to the present invention swims in the water.
FIG. 9A is one view showing movements of upper and lower vanes with the passage of time in a case in which a lure according to the present invention similarly swims in the water.
FIG. 9B is one view showing movements of upper and lower vanes with the passage of time in a case in which a lure according to the present invention similarly swims in the water.
FIG. 9C is one view showing movements of upper and lower vanes with the passage of time in a case in which a lure according to the present invention similarly swims in the water.
FIG. 9D is one view showing movements of upper and lower vanes with the passage of time in a case in which a lure according to the present invention similarly swims in the water.
FIG. 9E is one view showing movements of upper and lower vanes with the passage of time in a case in which a lure according to the present invention similarly swims in the water.
FIG. 10 is an illustration of a state in a case in which a single vane swims in the water in a state where a ring body is inserted thereinto.
FIG. 11 is an illustration of a locus of a horizontal cross section of a single vane.

### Best Mode for Carrying Out the Invention

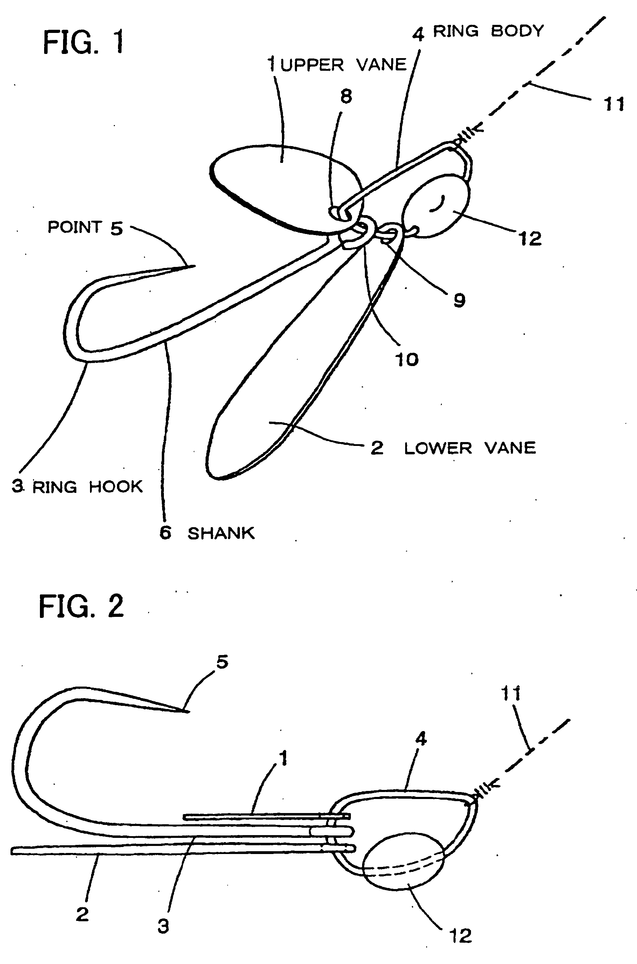

Modes of the present invention will be described hereinbelow with reference to the drawings. FIGs. 1 and 2 are illustrations of a mode in which a hook is attached to a lure rocker according to the present invention to constitute a lure. For the production of this lure, upper and lower vanes 1 and 2 respectively having insertion holes 8 and 9 at one end portions and a ring hook 3 having a ring 10 made at a tip portion of a shank 6 are integrated with a ring body 4 being inserted thereinto. Upon receipt of a water resistance in the water, the upper vane 1 and the lower vane 2 rock in conjunction with each other in a separated condition. The ring hook 3 is interposed between the upper vane 1 and the lower vane 2 and the point 5 is directed toward the upper vane 1 side.

The ring body 4 is produced by bending a copper wire into a ring-like configuration, and a fishing line 11 is joined to an upper portion of the ring body 4 while a lower portion thereof suspends the upper vane 1, the lower vane 2 and the ring hook 3 in a state where the copper wire is inserted thereinto. Although the ring body 4 can have a fully closed condition in which both the tip portions of the copper wire are fixedly secured to each other by means of welding or the like, it is also appropriate that it has an opening/closing function. Moreover, the employment of a fall-out preventing means for the upper vane 1 and others does not require that the ring body 4 is placed in a fully closed condition. Since it is undesirable to allow the joining position of the fishing line 11 to shift, in the example shown in FIGs. 1 and 2 the joining portion of the ring body 4 to the fishing line 11 is formed into an angular configuration, and the ring body 4 is formed as a whole into an elliptic configuration having a corner in one location. Moreover, to the ring body 4, a sinker 12 is attached in order to make the lure sink and maintain the posture of the ring body 4 vertically in the water.

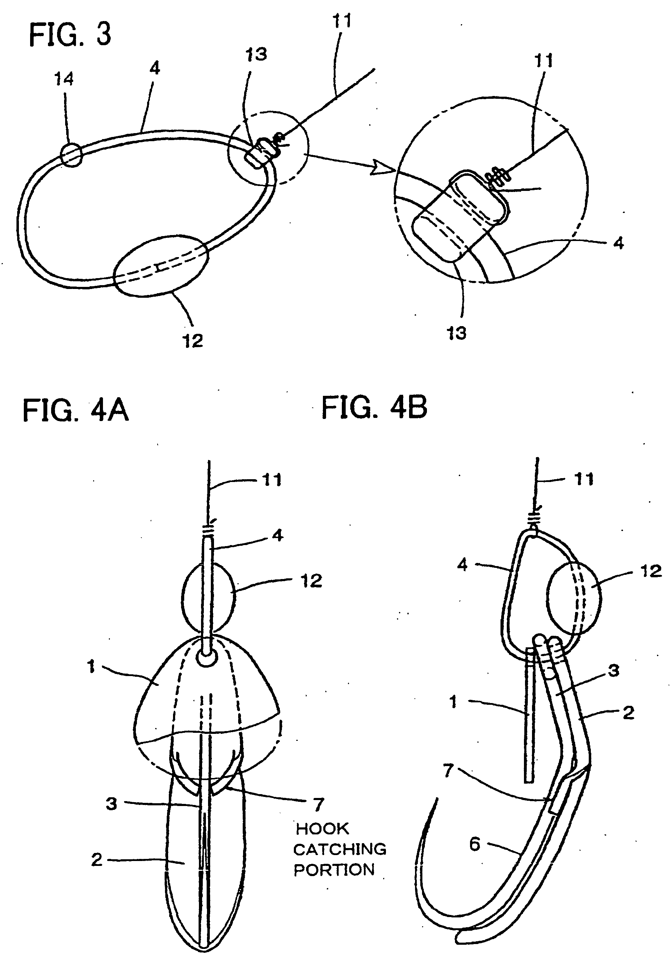

FIG. 3 is an illustration of another mode of the ring body 4. This ring body 4 has an oval configuration, and a fishing line 11 is joined to the ring body 4 through a connecting bead 13 loosely fitted thereon. Moreover, a glass bead 14 is welded to the ring body 4 above an upper vane 1 so that limitation is imposed on the movable ranges of the upper vane 1 and others. This can prevent the upper vane 1, a lower vane 2 and a ring hook 3 from growing together or from being involved with the ring body 4.

Preferably, the upper vane 1 is formed into a leaf-like configuration having a wide width, a short length and a thin thickness, which has usually been used in spinners. The length of the upper vane 1 is set so as not to interfere with a point 5 of the ring hook 3 when it takes a rocking action. Moreover, in a case in which the width of the upper vane 1 is narrower than the width of the lower vane 2, the upper vane 1 is drawn into a negative pressure zone appearing on an upper surface of the lower vane 2 due to a water flow and, in the worst case, the upper vane 1 can be sucked by the lower vane 2 to eliminate the movement peculiar to this lure, i. e. , the action that the upper vane 1 and the lower vane 2 works cooperatively with each other in an isolated condition. When the width of the upper vane 1 is set to be wider than that of the lower vane 2, a water flow develops a larger force lifting the upper vane 1 and, hence, such a problem does not exist.

Preferably, the lower vane 2 is formed into a slender leaf-like configuration and, since fish bites the lower vane 2 in most cases, the length of the lower vane 2 is set to be approximately equal to the length of the ring hook 3 in its axial direction to enhance the hook-on probability. Although the lower vane 2 usually sinks more deeply than the upper vane 1 because of being pushed by the ring hook 3 suspending by self-weight, in order for the upper vane 1 and the lower vane 2 to work satisfactorily with each other in an isolated condition, it is preferable that the lower vane 2 is set to have a larger thickness as compared with that of the upper vane 1 or it is formed into an elongated configuration to reduce the resistance of water so that the lower vane 2 itself sinks more easily. However, in a case in which the lower vane 2 is extremely narrow in width or extremely large in weight to diverge largely from the upper vane 1, they can not work with each other in some cases.

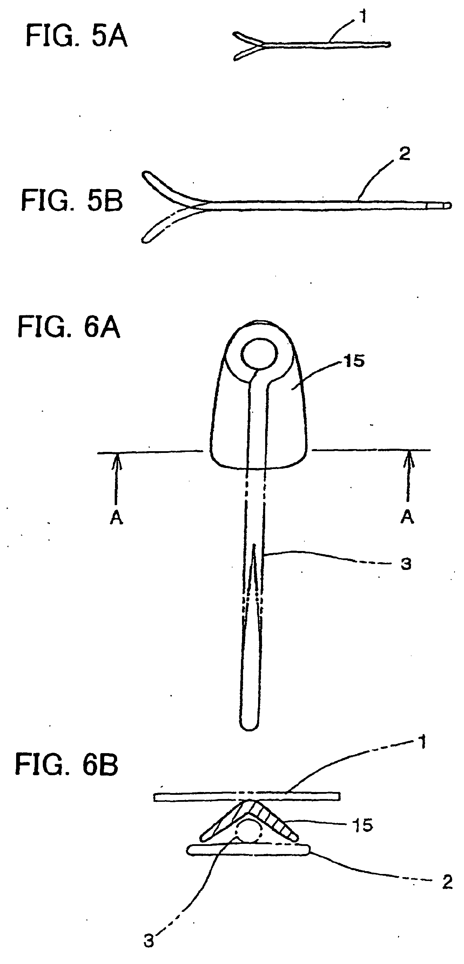

Although it is acceptable that the upper vane 1 and the lower vane 2 are formed into a flat-plate configuration as shown in FIGs. 1 and 2, if their tip portions are bent upwardly as shown in FIGs. 5A and 5B, they shows a stabler rocking action. However, for producing unique movements in the water on purpose, it is also considered that their tip portions are bent downwardly as indicated by two-dot chain lines in the illustrations or that the upper vane 1 and the lower vane 2 are bent in different directions. In a case in which they are formed into such unique configurations, or if the width of the upper vane 1 is narrower than that of the lower vane 2, in order to prevent the upper vane 1 and the lower vane 2 from sucking or interfering with each other, a spacer 15 having a roof-like cross section can be interposed between the upper vane 1 and the ring hook 3 as shown in FIGs. 6A and 6B.

FIGs. 4A and 4B show a more preferable mode of this lure. In this case, the lower vane 2 is made such that its central portion has a recess extending along its lengthwise direction to provide a ship-bottom-like configuration and a shank 6 of a ring hook 3 is bent into a "doglegged" configuration to extend along an upper surface of the lower vane 2. This configuration enlarges the space in which the upper vane 1 rocks and, hence, the upper vane 1 functions excellently. Moreover, even if the posture of the lower vane takes an approximately horizontal state because of a large water resistance, the space in which the upper vane 1 rocks is securable.

In addition, rifts are made in both sides of the lower vane 2 and the rift portions are bent toward a central portion of the lower vane 2, thereby providing hook catching portions 7 for holding the shank 6 of the ring hook. With this configuration, even if the water resistance is large, the shank 6 of the ring hook 3 is held on a longitudinal center line of the lower vane 2 by the hook catching portions 7 so that the ring hook 3 and the lower vane 2 rocks integrally and stably. Since the ring hook 3 rocks together with the lower vane 2, the hook 3 becomes unfindable to fish, so fish can bite more doubtlessly into it. Moreover, when fish hooks on to the ring hook 3, the ring hook 3 and the lower vane 2 separate immediately from each other and the fish's chin or the like hits against an edge of the lower vane 2 and, in this case, there is a considerable possibility that the hook comes off because the hitting portion acts as a supporting point when the fish twists so that the fish goes away. As the hook catching portions 7, any type is acceptable if only they define a groove having a width slightly wider than the diameter of the shank 6 of the ring hook 3, and the formationmethod therefor is not limited to the method mentioned here, but it is also appropriate that, for example, they are formed by means of press working or that separate members are adhered to a surface of the lower vane 2.

The lure shown here is made to appear to be an insect as a whole and, of the components, the sinker 12 corresponds to the head of the insect, the upper vane 1 corresponds to the wings thereof, the ring hook 3 corresponds to the legs thereof, and the lower vane 2 corresponds to the stomach thereof.

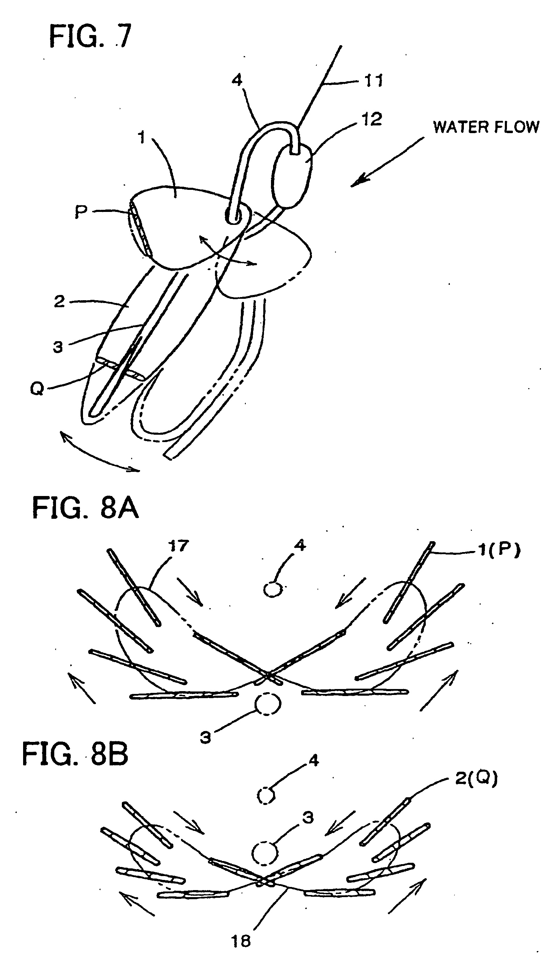

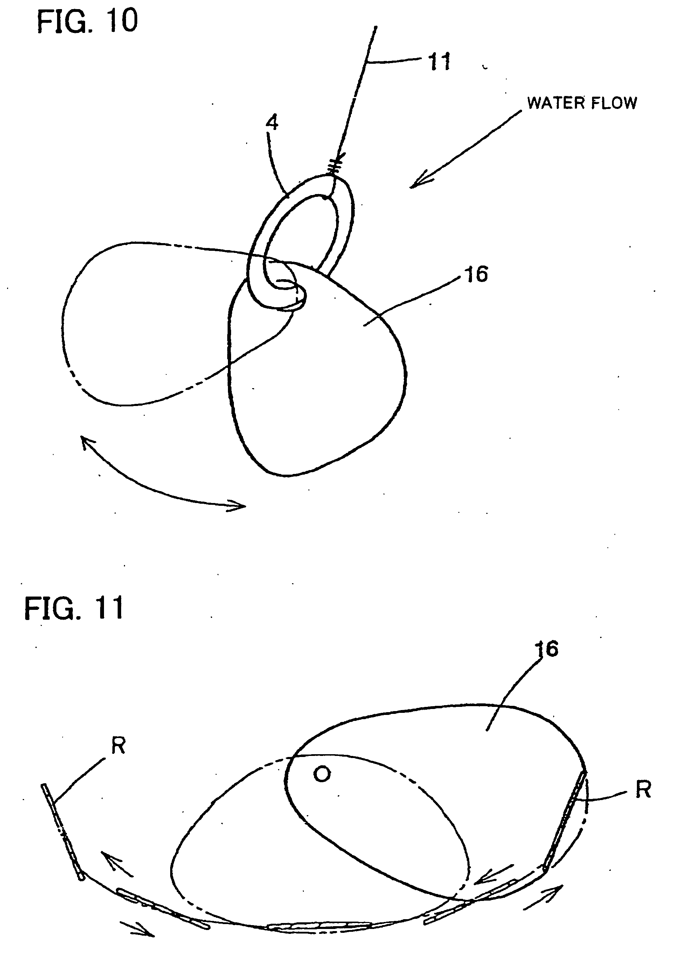

A description will be given hereinbelow of the in-water movements of the lure with a plurality of vanes described above in comparison with a case of the employment of a single vane. FIG. 7 is a perspective view showing a state in a case in which a lure with a plurality of vanes swims in the water, and FIGS. 8A and 8B are illustrations of loci drawn by a horizontal cross section P of the upper vane 1 and a horizontal cross section Q of the lower vane 2 at that time. Moreover, FIG. 10 is a perspective view showing a state in a case in which a single vane 16 swims in the water in a state where the ring body 4 is inserted thereinto, and FIG. 11 is an illustration of a locus of a horizontal cross section R of the vane 16 at that time. The configuration of the vane 16 is almost the same as the upper vane 1 shown in FIG. 7. In this connection, two-dot chain lines 17 and 18 in FIGs. 8A and 8B denote loci of middle points of the horizontal cross sections of the vanes.

The single vane 16 rocks to draw a large arc as shown in FIG. 11. The movement thereof is made slow such that its amplitude is large and its cycle is long. On the other hand, when two vanes are located up and down in an overlapping condition, a twisting movement additionally takes place so that, as shown in FIG. 8A, the upper vane 1 takes a rocking action three-dimensionally while drawing an eight-figure configuration. The movement thereof is smaller in amplitude and shorter in cycle, as compared with the case of the employment of a single vane. The lower vane 2 moves similarly to that of the upper vane 1 as shown in FIG. 8B. In addition, the upper vane 1 and the lower vane 2 do not move in no relation to each other but engaging with each other and rocking with the same cycle while maintaining a distance therebetween.

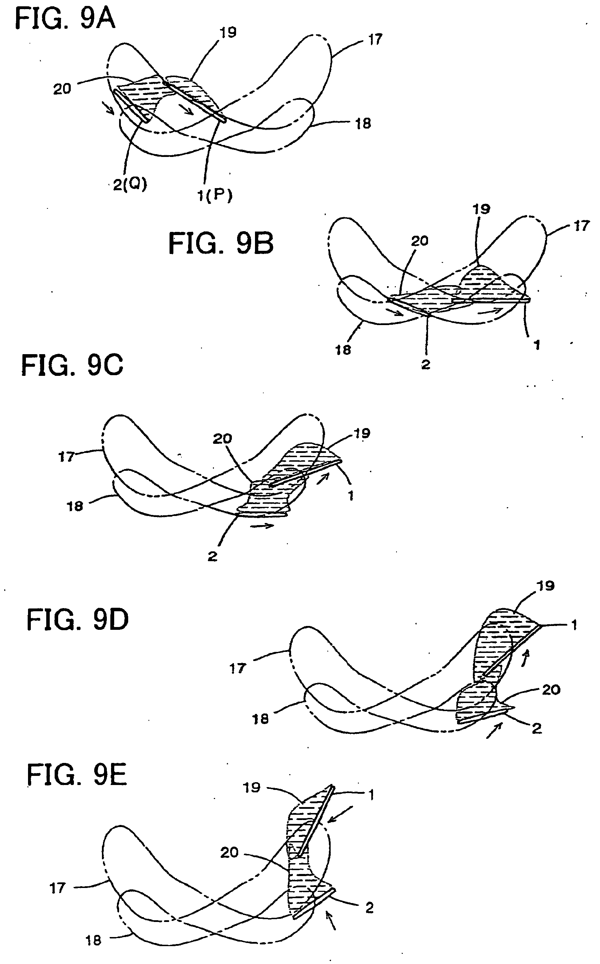

Referring to FIGs. 9A to 9E, a description will be given hereinbelow of a cause of the occurrence of such a movement. Each of the upper vane 1 and lower vane 2 receives a resistance due to a water flow at its lower surface side and forms a negative pressure zone 19 or 20 at its upper surface side which is an opposite side thereto. Therefore, it is considered that the cooperative movements of both the vanes in a separated condition occur because the forces due to the negative pressure zones 19 and 20, which draw both the vanes 1 and 2, act on the original rocking movements of the upper vane 1 and the lower vane 2 which occur due to the water resistance. The effects of the negative pressure zones 19 and 20 are produced at any position in FIGs. 9A to 9E and, in particular, they noticeably take place between FIG. 9C and FIG. 9D where both the vanes pass through the central portions of their loci. Since the upper vane 1 has a higher degree of freedom as compared with the lower vane 2 on which the weight of the ring hook is placed and which is made to have a large self-weight and a narrow configuration, it tends to rock in a wider range than the lower vane 2 as shown in FIG. 11. However, in a state in which the upper vane 1 protrudes largely from the lower vane 2 as shown in FIG. 9D, a lifting force due to the resistance of water acts upon the right half of the upper vane 1 while a lowering force due to the negative pressure zone 20 of the lower vane 2 acts upon the left half of the upper vane 1 and, at this time, the upper vane 1 turns rapidly as shown in FIG. 9E. It is considered that this effect is a major factor in decreasing the amplitude of the upper vane 1 and producing a three-dimensional deep rocking action including a twisting movement. The lower vane 2 drops according to the movement of the upper vane 1 as shown in FIGs. 9A and 9B.

As described above, with the rocker of a lure according to the present invention, the two vanes 1 and 2 work with each other and move faster and more intensively as compared with the case of the employment of angle vane, thereby providing a great fish attraction effect and making the substance of the vanes unfindable to fish. If the surfaces of the vanes are made glossy, they produce clear pulse reflected light, which provides a greater fish attraction effect. In addition, since each of the vanes 1 and 2 three-dimensionally moves to pass through different places when it goes and returns, which creates a double image showing different movements. Accordingly, even if fish in mountain streams has excellent dynamic cognitive power, it is difficult to the fish to see through the simulation.

Incidentally, the conf iguration of the lure is not limited to those illustrated. For example, it is also appropriate that a ring body is fixedly secured to a lower surface side of a float, made in the image of a small fish, to protrude downwardly and the ring body is inserted into two vanes to suspend them. Moreover, it is not always required that the same ring body is inserted into two vanes, and it is also acceptable that a fish hook and vanes are provided in a separate condition from each other, or that a fish hook is joined to a lower end portion of a lower vane.

### Industrial Applicability

With a rocker of a lure according to the present invention, two vanes rock while working with each other and three-dimensionally move more intensively as compared with a case of the employment of a single vane to attract the interest of fish more finely and make the simulation less detactable to fish, thus providing a lure capable of achieving an unprecedentedly high fishing result.

## Claims

1. A rocker of a lure, comprising a ring body (4) inserted into a first vane (1) and a second vane (2), **characterized in that** said ring body is made to maintain a vertical posture in the water and **in that** one vane (2) is formed to sink more deeply into the water with respect to the other vane (1).

2. The rocker of a lure according to claim 1, wherein a fishing line (11) is joined to said ring body, and said two vanes are engaged with said ring body to take rocking action.

3. The rocker of a lure according to claim 1, wherein said first vane (1) is formed to have a wide width and a short length, and said second vane (2) is formed to have a narrow width and a long length.

4. The rocker of a lure according to claim 1, wherein said ring body (4) has an oval configuration.

5. The rocker of a lure according to claim 2, wherein a bead (13) is loosely fitted over said ring body (4) and said fishing line (11) is set to said bead.

6. The rocker of a lure according to claim 1, wherein a bead (14) is fixed to said ring body (4) so that limitation is imposed on a movable range of said first vane (1).

7. The rocker of a lure according to claim 1, wherein said second vane (2) is formed into a slender leaf-like configuration.

8. The rocker of a lure according to claim 1, wherein said second vane (2) is made to have a larger thickness than said first vane (1) to enhance its own self-weight.

9. The rocker of a lure according to claim 1, wherein said second vane (2) is formed into a ship-bottom-like configuration in which its lengthwise central portion is recessed.

10. The rocker of a lure according to claim 1, wherein both side portions of said second vane (2) are bent toward its central portion to form a hook catching portion (7).

11. The rocker of a lure according to claim 1, wherein said ring body is inserted into a ring hook (3) and a spacer (15) is interposed between said first vane (1) and said ring hook.

12. The rocker of a lure according to claim 11, wherein said spacer (15) has a roof-like cross section.

## Patentansprüche

1. Schwingeinrichtung eines Köders mit einem Ringkörper (4), der in ein erstes Flügelelement (1) und ein zweites Flügelelement (2) eingesetzt ist,
**dadurch gekennzeichnet,**
**dass** der Ringkörper so ausgebildet ist, dass er im Wasser eine vertikale Stellung beibehält, und dass ein Flügelelement (2) so ausgebildet ist, dass es bezüglich des anderen Flügelelements (1) tiefer in das Wasser einsinkt.

2. Schwingeinrichtung eines Köders nach Anspruch 1,
wobei eine Angelleine (11) mit dem Ringkörper verbunden ist und die beiden Flügelelemente mit dem Ringkörper in Eingriff stehen, um die Schwingbewegung zu übernehmen.

3. Schwingeinrichtung eines Köders nach Anspruch 1,
wobei das erste Flügelelement (1) so ausgebildet ist, dass es eine breite Breitenabmessung und eine kurze Längenabmessung besitzt, und das zweite Flügelelement (2) so ausgebildet ist, dass es eine schmale Breitenabmessung und eine lange Längenabmessung besitzt.

4. Schwingeinrichtung eines Köders nach Anspruch 1,
wobei der Ringkörper (4) eine ovale Gestalt besitzt.

5. Schwingeinrichtung eines Köders nach Anspruch 2,
wobei über den Ringkörper (4) eine Perle (13) locker aufgesteckt ist und die Angelleine (11) an der Perle angebracht ist.

6. Schwingeinrichtung eines Köders nach Anspruch 1,
wobei eine Perle (14) an dem Ringkörper (4) so befestigt ist, dass auf einen Bewegungsbereich des ersten Flügelelements (1) eine Beschränkung auferlegt wird.

7. Schwingeinrichtung eines Köders nach Anspruch 1,
wobei das zweite Flügelelement (2) in eine einem schlanken Blatt ähnliche Ausgestaltung geformt ist.

8. Schwingeinrichtung eines Köders nach Anspruch 1,
wobei das zweite Flügelelement (2) so ausgebildet ist, dass es eine größere Dickenabmessung als das erste Flügelelement (1) besitzt, um sein Eigengewicht zu erhöhen.

9. Schwingeinrichtung eines Köders nach Anspruch 1,
wobei das zweite Flügelelement (2) in eine schiffsrumpfartige Ausgestaltung geformt ist, innerhalb der sein längsgerichteter Mittenabschnitt vertieft ist.

10. Schwingeinrichtung eines Köders nach Anspruch 1,
wobei beide Seitenabschnitte des zweiten Flügelelements (2) in Richtung seines Mittenabschnittes gebogen sind, um einen Hakenaufnahmeabschnitt (7) zu bilden.

11. Schwingeinrichtung eines Köders nach Anspruch 1,
wobei der Ringkörper in einen Ringhaken (3) eingesetzt ist und ein Abstandhalter (15) zwischen dem ersten Flügelelement (1) und dem Ringhaken angeordnet ist.

12. Schwingeinrichtung eines Köders nach Anspruch 11,
wobei der Abstandhalter (15) einen dachartigen Querschnitt besitzt.

## Revendications

1. Balancier d'un leurre comprenant un corps annulaire (4) inséré à l'intérieur d'une première palette (1) et d'une deuxième palette (2), **caractérisé en ce que** ledit corps annulaire est réalisé de façon à conserver une position verticale dans l'eau et **en ce qu'**une palette (2) est formée de façon à plonger plus profondément dans l'eau que l'autre palette (1).

2. Balancier d'un leurre selon la revendication 1, dans lequel une ligne de pêche (11) est reliée audit corps annulaire, et lesdites deux palettes viennent en prise avec ledit corps annulaire de façon à effectuer une action de balancement.

3. Balancier d'un leurre selon la revendication 1, dans lequel ladite première palette (1) est formée de façon à avoir une grande largeur et une courte longueur, et ladite deuxième palette (2) est formée de façon à avoir une largeur étroite et une grande longueur.

4. Balancier d'un leurre selon la revendication 1, dans lequel ledit corps annulaire (4) a une configuration ovale.

5. Balancier d'un leurre selon la revendication 2, dans lequel une perle (13) est fixée de façon lâche sur ledit corps annulaire (4), et ladite ligne de pêche (11) est fixée à ladite perle.

6. Balancier d'un leurre selon la revendication 1, dans lequel une perle (14) est fixée audit corps annulaire (4) de telle sorte qu'une limitation soit imposée à une plage de déplacement de ladite première palette (1).

7. Balancier d'un leurre selon la revendication 1, dans lequel ladite deuxième palette (2) est formée sous la forme d'une configuration en forme de feuille mince.

8. Balancier d'un leurre selon la revendication 1, dans lequel ladite deuxième palette (2) est réalisée de façon à avoir une largeur supérieure à celle de ladite première palette (1) de façon à renforcer son propre poids intrinsèque.

9. Balancier d'un leurre selon la revendication 1, dans lequel ladite deuxième palette (2) est formée sous la forme d'une configuration en forme de coque de bateau, dans laquelle sa partie centrale dans le sens de la longueur est en cavité.

10. Balancier d'un leurre selon la revendication 1, dans lequel les deux parties latérales de ladite deuxième palette (2) sont incurvées vers sa partie centrale de façon à former une partie de saisie d'hameçon (7).

11. Balancier d'un leurre selon la revendication 1, dans lequel ledit corps annulaire est inséré dans un hameçon à anneau (3), et un élément d'espacement (15) est interposé entre ladite première palette (1) et ledit hameçon à anneau.

12. Balancier d'un leurre selon la revendication 11, dans lequel ledit élément d'espacement (15) a une section transversale en forme de toit.
